Europäisches Patentamt

European Patent Office

Office européen des brevets

(19)

(11) Publication number: **0 081 967**
A1

(12) # EUROPEAN PATENT APPLICATION

(21) Application number: **82306526.3**

(22) Date of filing: **08.12.82**

(51) Int. Cl.³: **D 21 H 5/00**, D 21 H 3/48,
B 32 B 29/00

---

(30) Priority: **11.12.81 GB 8137507**

(43) Date of publication of application: **22.06.83**
**Bulletin 83/25**

(84) Designated Contracting States: **AT BE CH DE FR GB IT LI LU NL SE**

(71) Applicant: **EPSILON DEVELOPMENT LIMITED,**
**Metropolitan House Hobson Street, Oldham Greater Manchester (GB)**

(72) Inventor: **Wadeson, Frank Peter, 19, Sevington Park, Maidstone Kent (GB)**

(74) Representative: **Atkinson, Peter Birch et al, Marks & Clerk Scottish Life House Bridge Street, Manchester M3 3DP (GB)**

---

(54) **Production of laminate materials.**

(57) A method of producing a laminate material, e.g. a decorative laminate, comprises hot pressing together at least one paper layer impregnated with a heat curable resin (e.g. an amino resin) and a layer of cellulose material, preferably paper, impregnated with an isocyanate having at least two isocyanate groups per molecule and whit a catalyst for polyurethane formation.

1.

## PRODUCTION OF LAMINATE MATERIALS

The present invention relates to the production of laminate materials particularly, but not exclusively, decorative laminate materials such as used for decorating and/or protecting work surfaces in kitchens etc.

In the past, functional decorative laminates for horizontal, or vertical surfaces, e.g. table tops, were prepared by impregnating several layers of kraft paper with phenolic resin and compacting in a hydraulic press.

The resulting laminates were less porous, harder wearing and more hygienic than the wooden counterparts. They did however have the disadvantage that the colour range was limited to black, brown or dark red, and they were not very scratch resistant.

An important advance in decorative laminate industry occurred when it was discovered that melamine urea/formaldehyde resins, when impregnated onto white paper and pressed, gave a transparent effect which enabled a printed paper, also impregnated with the amino resins, to be seen through the upper paper layer which itself provided a protective, hard wearing, scratch and stain resistant surface. This surface of amino resin/ paper is, however, very brittle and, therefore, it

2.

was necessary to provide a backing of a cheaper kraft paper impregnated with phenolic resin. Such a composite structure is now widely used.

A decorative laminate having this type of composite structure is generally produced by the hot pressing of several paper layers with different impregnants. For example the following paper layers may be used:

(i) an upper sulphite paper layer impregnated with an amino resin, e.g. a melamine or urea formaldehyde resin;

(ii) an intermediate paper layer printed or otherwise decorated with the desired pattern and impregnated with an amino resin in an amount by weight less than that in the first paper layer; and

(iii) several, usually 5 or 6, lower layers of paper impregnated with phenol-formaldehyde resin.

After hot pressing of the layers (i)-(iii), the laminate produced has a decorative surface visible through the sulphite paper, which is now transparent with the cured amino resin providing a hard wearing surface, and a backing of the phenol-formaldehyde paper. It is necessary to use several layers of the phenol-formaldehyde impregnated paper to give the required strength to the finished laminate, particularly to prevent damage during handling.

3.

and cutting. Such a laminate is eminently suitable for table tops etc but does have the disadvantage that it is relatively thick and cannot be substantially bent without cracking. Consequently it is not possible to shape such laminates around bends on surfaces being decorated unless the laminate is only partially cured in the press and subsequently heated shortly before or during application to the surface. Additionally, the production of a balanced laminate i.e. one which is not prone to warping and thus difficult to apply, requires a balance of the various components and process used for producing the laminate. Slight deviation from the ideal conditions lead to laminates with differential expansion characteristics which is thus prone to warping.

Finally laminates produced by the above method are comparatively expensive.

According to the present invention there is provided a method of producing a laminate material comprising hot pressing together at least one paper layer impregnated with a heat curable resin and a layer of cellulose material impregnated with an isocyanate having at least two isocyanate groups per molecule and with a catalyst for polyurethane formation.

The layer of cellulose material impregnated

4.

with the isocyanate is preferably paper although other cellulose materials may be used. The following description is directed specifically to the use of paper as the cellulose material but it is to be understood that this description is equally applicable to the case where other cellulose materials are used.

In the method of the invention the hot pressing operation effects cure of the resin and also causes reaction to occur between the isocyanate and hydroxyl groups of the cellulose to form a polyurethane, this reaction being promoted by the catalyst. The cured resin may provide a wear resistant finish to one side of the laminate whereas the polyurethane ensures that the laminate is very flexible but nevertheless extremely strong for its thickness.

It is well known that polyurethanes are tough impact resistant materials and this property is highlighted in this invention as decorative laminates can now be prepared with only one kraft paper backing layer which can be very thin, e.g. having a weight of $50g/m^2$ or lower. The laminate exhibits considerable flexibility enabling it to be formed round curvatures easily and can even be cut with scissors, yet it can out-perform a conventional but similar thickness laminate on

impact resistance and handling characteristics. It should, however, be pointed out that thicker materials can also be made by this new process. The paper used for producing the laminate may for example have a weight of 50-150 $g/m^2$ (e.g. 90 $g/m^2$) although higher weights may be used.

The heat curable resins used as impregnants for one of the paper layers may for example, be amino resins (e.g. urea formaldehyde resins or urea melamine formaldehyde resins) or other resins which are wear resistant when cured. Amounts of heat curable resin to be used are preferably 30-70% by weight of the impregnated paper (i.e. based on the total weight of the heat curable resin and the paper on which it is impregnated.) Amino resins, for example urea-formaldehyde or melamine resins are particularly suitable because they flow into the paper impregnated with the isocyanate and surprisingly there is no incompatibility between the isocyanate or polyurethane and the amino resins. Additionally cured amino resins provide a good wear resistant surface for the laminate. The paper impregnated with the isocyanate should be substantially dry otherwise polyureas will be formed instead of the desired polyurethanes. By the term "substantially dry" we mean that the paper should not contain free water (i.e. it should not be moist) although water normally present in paper is tolerable. Most preferably the total amount of water present in the paper should not exceed about 5% by weight, and is most preferably not more than 1 or 2% by weight.

The isocyanates used are preferably diisocyanate although tri- or higher functionality isocyanate may be used. Suitable isocyanates include toluene diisocyanate 1,6-hexamethylene diisocyanate, and transvinylidene diisocyanate. The isocyanates which, for reasons which will become apparent are most preferred are those which are liquid at ambient temperature with low vapour pressures. An isocyanate which fulfils these criteria, and which we prefer to use in our method, is crude diphenyl methane diisocyanate.

The isocyanate is generally used in an amount of 5 to 55% more preferably 10 to 30% by weight of the isocyanate impregnated paper, i.e. based on the total weight of the isocyanate and the paper on which it is impregnated. Depending on the amount of isocyanate used, the final polyurethane may be substantially homogenous, or may still contain cellulose material (from the paper) this being the case when an excess of cellulose compared to the isocyanate is present.

The amount of isocyanate used relative to the paper should be such that the majority of the isocyanate groups are consumed in the cross-linking reaction forming the macro molecule. There will thus be little or no reaction of the isocyanate with any atmospheric moisture after the bulk of the polyurethane-forming reaction has occurred.

Impregnation of the paper with the isocyanate

7.

may be effected by dissolving the isocyanate in a suitable solvent, impregnating the paper with the solution, and evaporating the solvent. If however the isocyanate is a liquid it may be applied by transfer roller coating.

The catalyst can be any one of a number of compounds which are known to catalyse the formation of polyurethanes from hydroxyl containing compounds and isocyanates without simultaneous production of gas.

The catalyst is preferably one which does not promote a significant amount of reaction between the cellulose and isocyanate at ambient temperature and which furthermore does not react significantly with the isocyanate.

Suitable catalysts include amines, stannous salts, zinc salts (e.g. zinc octoate) and organometallic compounds (e.g. di-n-butyl tin di laurate). Particularly preferred however are "latent" catalysts which are more active when the impregnated cellulose material is heated. Examples of "latent catalysts" are quaternary ammonium salts, such as a quaternary ammonium salts in ethylene glycol sold under the name "DABCO TAC" from Alpha Chemicals Limited. Suitably the amount of catalyst used will be 0.05% to 4% more preferably 0.1 to 2% by weight of the isocyanate. If the isocyanate is applied to the paper as a solution in a suitable solvent then conveniently the catalyst will also be dissolved in the solution. Alternatively, when transfer roller coating, the catalyst may be incorporated in the liquid isocyanate.

The catalyst is an essential feature of the process because, in its absence, hot pressing of the impregnated cellulose would simply result in little or no polyurethane formation due to the unreactive nature of the hydroxy groups in cellulose. However the use of catalyst at elevated temperature facilitates this reaction.

The final stage in the method is the hot pressing operation. Generally the pressure will be in the range of 7 to 300 kg cm$^{-2}$ (100 to 4200 psi), preferably 64 to 300 kg cm$^{-2}$ (900 to 4200 psi) and more preferably 64 to 115 kg cm$^{-2}$ (900 to 1600 psi) as the level of isocyanate is increased the pressure can be reduced and vice-versa. The application of an elevated pressure, for example of up to 300 kg cm$^{-2}$ (4200 psi) may be achieved in a conventional laminating press and has the advantage that it brings the polyisocyanate into more intimate contact with the cellulose in the paper, thereby ensuring a more complete reaction between the isocyanate groups and the hydroxyl groups. This has the effect of enabling a smaller quantity of isocyanate to be used relative to the amount of cellulose material. The pressing operation may alternatively be conducted continuously be pressing the layers to be laminated between the facing runs of two endless driven belts. The temperature required is one at which both the polyurethane forming reaction occurs and the resin is cured.

Generally the resin curing temperature will be higher than that required for polyurethane formation (which can with suitable catalysts be cured at lower temperatures). The laminate will generally be held at the pressing temperature for a period of several minutes, preferably about 10 minutes.

The laminate of the invention may take a number of forms. In one embodiment, a pre-marked paper (e.g. having a decorative pattern) impregnated with a heat curable resin system (e.g. an amino resin system) is laminated to a paper layer which has been impregnated with isocyanate and a catalyst for polyurethane formation. The amount of amino resin on the printed paper may be 30-50% (preferably about 40%) by weight based on the weight of the impregnated paper. The amount of isocyanate is preferably 10-30% by weight based on the total weight of the isocyanate and the paper on which it is impregnated.

A laminate produced from the two paper layers is eminently suitable for many applications in which a hard wearing surface is not required, e.g. for decorating a vertical surface.

A laminate which has better wear characteristics may be produced from:

(a) a first, upper layer impregnated with a heat curable resin which when cured exposes the marking on layer (b).

(b) a second, intermediate, paper layer having a pattern or other marking applied by printing or any suitable technique and being impregnated with a heat curable resin system which is the same as or different from that on paper (a); and

(c) a third paper layer impregnated with an isocyanate and a catalyst for polyurethane formation.

For preference, paper layer (a) is a sulphite paper, which allows the decorative surface to be visible therethrough after the hot pressing operation. Any other paper having this property may however be employed as layer (a). Layer (b) is preferably of a printable paper and layer (c) is for preference of Kraft paper, although once again other papers can be used. Preferably each of paper layers (a)-(c) are of 3mm thickness or less.

Most suitable the amount of heat curable resin on paper (a) is 50-70% preferably about 60% by weight of the impregnated paper (a). The amount of resin in

0081967

paper (b) is less than that on paper (a) and is preferably 30-50%, most preferably about 40% by weight of the impregnated paper (b). For preference the heat curable resin is an amino resin, as mentioned previously.

Generally the amount of isocyanate will be 10 to 15% by weight based on the weight of the isocyanate and the paper on which it is impregnated. If the isocyanate is applied by transfer roller coating to one side only of the paper, then preferably that side is positioned remote from paper (b) when the layers are assembled.

Hot pressing may be effected in a multi or single "Daylight" press in which a plurality of sheets may be stacked. Alternatively pressing may be carried out continuously as previously indicated.

Pressing is carried out at a temperature required to ensure that the curable resin is cured and that reaction is effected between isocyanate and cellulose. In the case of an amino resin the curing temperature is higher than the isocyanate/cellulose reaction temperature and thus determines the hot pressing temperature, which will generally be about 140-160°C.

When using an amino resin, there is migration of this resin to a certain extent from the surface layers (a) and (b) into the isocyanate impregnated paper layer (c), there being surprisingly no incompatability between the amino resin and isocyanate.

The resulting laminate has the wear properties of those produced by the conventional method discussed above, these being attributable to the amino system, but is considerably thinner due to the lesser number of paper layers. The laminate is very flexible and can easily be moulded around bends, and affixed to surfaces by conventional adhesives. Additionally the laminate is well balanced and thus not prone to warping.

By way of comparison, Table I shows the properties of laminates produced from layers (a)-(c) above and those of a laminate produced from layers (i)-(iii) above. For the laminates produced from layers (a)-(c), the heat curable resin was a melamine resin and layer (c) was a kraft paper impregnated with amounts of isocyanate as shown in the table. To provide a direct comparison all laminates have been produced at a nominal 0.6 mm thickness.

In the table, L stands for length and W for width. Cross breaking strengths are measured for the decorative face of the laminate both in compression and tension and, for each of these conditions, across the width and length of the laminate.

It will be appreciated from the table that the properties of the laminate produced in accordance with the invention are generally equal to or superior than those of the standard laminate. Additionally, for practical use, the standard laminate must be fabricated thicker than that of the invention thus giving rise to the disadvantage discussed above.

It should also be appreciated that the laminate produced from layers (a)-(c) has a number of very significant advantages over the conventional laminates, in addition to those of thinness and flexibility. In particular the use of only three paper layers to produce the laminate, instead of at least 7 in the conventional laminate, means that the product is cheaper. Additionally, the use of lesser amounts of paper to produce the same area of laminate results in less space being required for raw materials storage and savings in transport costs for supplying such materials. Furthermore the thinness of the laminate means that more sheets may be pressed in a press of given size, thus resulting in energy savings. Finally, the use of a transfer roller coating method when used, to apply the isocyanate to the paper avoids the need for a drying step which is required when paper is impregnated with a solution of a phenol-formaldehyde resin, which is the case in the prior art process.

TABLE I

| TEST | | | STANDARD LAMINATE | MELAMINE RESIN SURFACED LAMINATES WITH MDI/KRAFT CORE | | |
|---|---|---|---|---|---|---|
| | | | Nominal 0.6mm | Nominal 0.6mm | Nominal 0.6mm | Nominal 0.6mm |
| % MDI in Kraft | | | - | 10% | 15% | 20% |
| Dimensional movement in boiling water | L% | | 0.7 | 0.4 | 0.4 | 0.3 |
| | W% | | 1.4 | 1.4 | 1.2 | 1.0 |
| Crossbreaking strength (N/mm$^2$) | Face tens L | 348 | | 335 | 303 | 373 |
| | Face comp L | 619 | | 730 | 667 | 792 |
| | Face tens W | 275 | | 233 | 244 | 254 |
| | Face comp W | 430 | | 615 | 601 | 598 |
| Impact Strength (N) | | | 0.22 | 0.62 | 0.71 | 0.71 |

The invention will be further illustrated with reference to the following non-limiting example.

EXAMPLE

A laminate was produced from the following paper layers;

(a)  a sulphite paper inpregnated with 60% by weight of an amino resin based on the total weight of the impregnated paper (a) (i.e. including amino resin);

(b)  a printed sulphite paper impregnated with 40% by weight of an amino resin based on the total weight of the impregnated paper (b); and

(c)  a kraft paper impregnated with 10% by weight of crude MDI based on the total weight of paper (c) and the crude MDI.  The MDI also included, as catalyst for polyurethane formation, DABCO TAC in an amount of 0.4% by weight of the crude MDI.

The papers were laminated together with paper (a) on the printed side of paper (b) and with paper (c) on the side of paper (b) remote from paper (a).

Lamination was effected at a temperature of $140^{o}C$ and a pressure of 100-115 kg $cm^{-2}$ (1400-1600 psi).

The resultant laminate was flexible and had excellent wear characteristics.  The laminate had properties similar to those under the 10% column

0081967

in the foregoing table.

CLAIMS:

1.    A method of producing a laminate material comprising hot pressing together at least one paper layer impregnated with a heat curable resin and a layer of cellulose material impregnated with an isocyanate having at least two isocyanate groups per molecule and with a catalyst for polyurethane formation.

2.    A method as claimed in claim 1 wherein the isocyanate is used in an amount of 5 to 55% by weight of the impregnated cellulose material.

3.    A method as claimed in claim 2 wherein the isocyanate is used in an amount of 10 to 30% by weight of the impregnated cellulose material.

4.    A method as claimed in any one of claims 1 to 3 wherein the isocyanate is selected from toluene diisocyanate, 1,6-hexamethylene diisocyanate, transvinylidene diisocyanate and diphenyl methane diisocyanate.

5.    A method as claimed in any one of claims 1 to 4 wherein the amount of catalyst is 0.05 to 4% based on the weight of the isocyanate.

6.    A method as claimed in claim 5 wherein the amount of catalyst is 0.1 to 2% by weight of the isocyanate.

7.    A method as claimed in any one of claims 1 to 6 wherein the catalyst is selected from amines, stannous salts, zinc salts, organometallic compounds and quaternary ammonium salts.

8.    A method as claimed in any one of claims 1 to 7 wherein the heat curable resin is used in an amount of 30 - 70% by weight of the impregnated paper.

9.    A method as claimed in any one of claims 1 to 8 wherein the heat curable resin is an amino resin.

10.    A method as claimed in any one of claims 1 to 9 wherein the pressing is effected at a pressure of 7 to 300 kg cm$^{-2}$.

11.    A method as claimed in any one of claims 1 to 10 wherein the pressing is effected at a temperature of 140 - 160$^{\circ}$C.

12.    A method as claimed in claim 1 which comprises hot pressing together

(a)    a first paper layer impregnated with a heat curable resin system;

(b)    a second paper layer provided with a marking and impregnated with a heat curable resin; and

(c)    a layer of cellulose material impregnated with isocyanate.

13.    A method as claimed in claim 12 wherein the first paper layer is impregnated with 50-70% by weight of the heat curable resin based on the weight of the impregnated first paper.

14.    A method as claimed in claim 11 or 12 wherein the second paper layer is impregnated with 30 - 50% by weight of the heat curable resin based on the weight of the impregnated second paper.

15.   A method as claimed in any one of claims 1 to 14 wherein the layer of cellulose material is paper.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-1 475 596 (ANATEX) <br><br> *Page 1, lines 15-31; page 3, lines 79-100,112-130; page 4, lines 1-14* | 1,2,10 ,11 | D 21 H 5/00 <br> D 21 H 3/48 <br> B 32 B 29/00 |
| Y | GB-A-1 585 074 (F.P.WADESON) <br><br> *Page 2, lines 115-130; page 3, lines 1-5,36-45,80-91; page 4, lines 24-35,76-86* | 4,5,6, 7 | |
| A | AU-A- 491 901 (FUJI K.K.K.) <br><br> ----- | | |

**TECHNICAL FIELDS SEARCHED (Int. Cl. ³)**

B 32 B
D 21 H

The present search report has been drawn up for all claims

| Place of search | Date of completion of the search | Examiner |
|---|---|---|
| THE HAGUE | 29-03-1983 | VAN THIELEN J.B. |